# EUROPEAN PATENT SPECIFICATION

(11) **EP 2 764 969 B1**
(45) Date of publication and mention of the grant of the patent: **28.03.2018**
(21) Application number: 14154377.7
(22) Date of filing: 07.02.2014
(51) Int. Cl.: B29B 17/00, B29C 70/02, B29C 43/00, B29C 47/00

(54) **A process for the preparation of a recycled composite material**
Verfahren zur Herstellung eines recycelten Verbundmaterials
Un procédé pour la préparation d'un matériau composite recyclé

(30) Priority: 07.02.2013 NL 2010271
(43) Date of publication of application: 13.08.2014
(73) Proprietor: TVR Holding BV, 3024 EG Rotterdam (NL); Peejeedee Beheer BV, 3844 KA Harderwijk (NL); SJS Beheer BV, 8242 RC Lelystad (NL); R.E. van Riemsdijk Holding BV, 3261 CA Oud-Beijerland (NL)
(72) Inventor: van Riemsdijk, Roland Edward, 8219 PZ, Lelystad (NL); Dwarshuis, Pieter Jan, 8219 PZ, Lelystad (NL)
(74) Representative: HGF Limited

(56) References cited:
- EP-A2- 0 692 356
- WO-A2-2012/091558
- US-B1- 6 576 176
- Daimlerchrysler Ag: "Umwelt-Zertifikat Mercedes-Benz C-Klasse Environmental Certificate Mercedes-Benz C-Class", , 19 January 2007 (2007-01-19), pages 1-52, XP055188560, www.daimlerchrysler.com Retrieved from the Internet: URL:https://www.daimler.com/Projects/c2c/c hannel/documents/2003760_Environmental_Cer tificate_Mercedes_Benz_C_Class.pdf [retrieved on 2015-05-11]
- M. Xanthos ET AL: "Prototypes for building applications based on thermoplastic composites containing mixed waste plastics", Polymer Composites, vol. 23, no. 2, 1 April 2002 (2002-04-01), pages 153-163, XP055269338, ISSN: 0272-8397, DOI: 10.1002/pc.10421

## Description

The present invention relates to composite materials prepared from particulate binder materials and from fibrous filler material. The present invention further relates to a method for the preparation of the composites and shaped articles therefrom, and to their use as building materials, as sheet material for concrete applications, and for furniture and for other structural and decorative applications.

### Background of the Invention

Composite materials, in particular shaped articles such as panels are used in various applications, for instance as outer claddings for buildings, as visual displays in advertising activities, and in structural applications. Such materials usually comprise a binder material and a solid filler material, typically a woven and/or non-woven fibre material that offers structural integrity and/or insulation value, as well as external layers facing the environment.

Specifically for outdoor applications, the composites have to be durably resistant to the different weathering conditions, including variations in humidity and temperature, exposure to UV and other radiation, and exposure to chemicals (micro)biological growth.

Composite materials for outdoor use have been developed based on fibre-enforced concrete material. However, these materials are difficult to shape or affix due to the low mechanical strength of the composites. Furthermore, the materials have a high density, which in combination with the low mechanical strength requires comparatively thick panels, which in turn makes them difficult to attach them for instance exterior building surfaces, limiting their use to applications and constructions that can bear the high weight. A further issue with these materials is the leaching of highly corrosive salts.

To reduce the cost of composites, recycled materials are often used as at least part of the filler material. US-A-6,044,604 for instance discloses a composite roofing board having a paper layer made of recycled paper fibres. US-A-5,718,096 discloses using recycled materials and glass fibres in composite panel elements for use in building structures.

Typically, thermosetting binders are used in such materials, requiring a suitable curing process, resulting in a rather narrow production window both in time due to the reactivity of the binder system, and also typically limiting the maximum thickness of the composite materials if heat is to be applied for curing.

In view of the foregoing, it should be apparent that there exists a need for a low-cost and highly stable composite building material that can be formed into building structural panels using a relatively simple and inexpensive manufacturing process, such that the panels have adequate dimensional stability, durability and flexibility.

Applicants have now surprisingly found that composite materials can be prepared from a thermoplastic waste material and a fibrous waste material, which are resistant to humidity and/or rot. Furthermore, the materials can advantageously be sourced from recycling materials that otherwise has little other uses than fuel purposes.

Accordingly, the present invention relates to a process accoring to claim 1. The present disclosure further provides a composite material obtainable by the process that comprises primarily a fibrous filler material and a particulate binder material.

More particularly, the composite material preferably comprises recycled fibrous material and recycled thermoplastic material, optionally with additives and fillers. It is still another object of the present invention to provide a composite material that includes various amounts of other natural or synthetic recycled or virgin
substances in proportions that will contribute to the structural integrity or other features of the material, such as preferably recycled ground hard polyurethane foam particles that will increase mechanical strength as well as improve the insulation properties; fibrous or otherwise sheet materials, barrier layers and other enforcements or claddings. The composite materials were found to inherently have a high resistance to water and/or deterioration.

The particulate binder material is a thermoplastic polymeric binder material. The use of such materials allows avoiding toxic or environmentally harmful emissions of volatile compounds, as well as reduced exposure for the applicator to small molecules. Suitable particulate thermoplastic materials according to the present invention may advantageously comprise at least two polymeric materials chosen among functionalized polyethylenes, functionalized polypropylenes, ethylene acid copolymers, ionomers, functionalized ethylene vinyl acetate (EVA) copolymers, functionalized thylene alkyl (meth)acrylate copolymers, polyethylene terephthalate (PET), poly-ethylene-furanoate (PEF); engineering polymers such as nylon and related polycondensation polymers; polyvinyl chloride (PVC), ABS, elastomers and mixtures thereof; and copolymers of any kind employed in these materials; as well as bituminous materials used e.g. as sound proofing materials.

Preferably, the thermoplastic material comprises one or more polyolefins, such as polypropylene, further preferably comprising one or more functionalized polyolefins, preferably ethylene copolymers and/or ionomers for improved adhesion. The thermoplastic binder polymer preferably has a melt flow index less than 500 g/10 min according to ASTM Method No. 01238 at 190°C and a load of 2160 g. However, particularly suitable thermoplastic binders are recycled thermoplastics as disclosed in US-A-6191228, preferably in particulate form suitable for the present process, including at least two of HDPE, PET, PEF, polyvinyl chloride (PVC), polypropylene (PP), polystyrene (PS), EPDM; ABS; TPE; TPU; PC/ABS; PMMA and/or mixtures thereof. Preferably, the components employed in steps (a) and (b) are blended in manner that is suitable. Preferably, steps (a) and (b) are at least in part combined, for instance in one or more suitable extruders prior to the shaping step.

The materials to be employed in the present process include those obtained from recycling automobiles, generally vehicles, but may also include materials obtained from recycling and shredding white goods, furniture, electronics waste, or any waste that may suitably comprise fractions comprising thermoplastic polymers, and fibre fractions. In this respect, the term "car body" may also be understood as referring to white goods, furniture, electronics waste. Particularly preferred suitable thermoplastic materials according to the invention are the so-called plastic-rich waste low in metal disclosed in WO-A-2009/124651, more specifically the "Schwerfraktion SF (Rohgranulat)" disclosed therein. These materials are preferably fractions obtained from recycling automobiles, after removal of metals and fibrous fractions.

Typically the thermoplastic material comprises at least two, but typically at least 5 different polymers. A particularly suitable composition is disclosed in Table 1:

**Table 1: a typical thermoplastic component according to the invention**

| Fractions | Mass balance |
|---|---|
| | [%] |
| Waste, wood, PE, PP | 10,0% |
| Textiles, dust | 4,0% |
| Metals | 0,8% |
| EPDM | 12,0% |
| ABS/PS | 12,0% |
| TPE | 7,9% |
| TPU | 10,2% |
| PC/ABS | 36,0% |
| PMMA | 5,5% |
| Humidity | 1,6% |
| Total | 100,0% |

Preferably, suitable fibrous materials according to the invention are the light fractions SLF (*Shredder-Leichtfraktion*); *Rohflusen* and/or *Leichtflusen* LF1, LF2, and /or LF1-LG disclosed in WO-A-2009/124651, and/or *Shredderflusen* as disclosed in DE-A-19755629. These materials are fibrous fractions obtained from recycling automobiles after removal of metals and thermoplastics.

This process comprises several steps: I) A first step in the recovery cycle is removal of all suitable parts that may be refurbished or recycled selectively, such as e.g. the accumulator, tyres; catalytic converters and panes of glass where applicable, and optionally, thermoplastic and/or thermoset polymeric parts; II) a step for the removal of the automotive operating fluids, such as fuel; engine, gear, power steering and shock absorber oil; air conditioning refrigerants as well as brake and coolant fluids; III) crushing the remaining bodywork and subjecting it to a grinding operation, preferably in a so-called shredder. This suitably grinds the remaining bodywork into pieces of just a few centimetres in size. At this stage, in a further step ferrous and non-ferrous metal parts are removed. In these first steps I to III, up to 80 % wt. of the scrap vehicle has been removed for recycling purposes, to obtain a fraction further referred to as shredder residue, which represents 20 %wt of the recycled car. This shredder residue is then subjected to a so-called the "VW-SiCon Process", wherein several fractions are gained from the shredder residue. The process thus further comprises subjecting the shredder residue is subjected to at least one further grinding step (IV), and to at least one separation step (V). The latter may advantageously be performed using one or more cyclones that separate material according to density. This process results in one or more fibrous fractions as well as one or more thermoplastic fractions, all of which may be suitable as starting material according to the subject process. Preferably the density of the fibrous material is of from 200 to 450 kg/m³. The density of the fibrous material is measured prior to incorporation into the composite. Preferably, the fibrous material comprises recycled car interior material. More preferably, the fibrous material is produced in process comprising the steps of (A) shredding a car body, and (B) removing ferrous and/or non-ferrous metal, and (C) separating the fibrous material from a heavier, thermoplastic fraction, and a lighter particulate fraction. Step (A) may be executed in any suitable manner.

In step (B), at least a part, and preferably the majority of the ferrous and/or non-ferrous metal particles are removed. This may conveniently be done by magnetic separation for metals that respond to a magnetic field, and/or through e.g. density based separation methods, such as floating and/or centrifugation, or sifting and screening.

Applicants found that smaller ferrous or non-ferrous metal pieces that may have not been removed from the thermoplastic or the fibrous fraction, such as e.g. copper wires, are advantageous in heat dissipation throughout the composite material, while larger pieces may disturb the blending process due the difficulty to transport them in the blending device, and due to the fact that they may cause defects in the composite upon shaping. Accordingly such remnants are preferably removed prior to step (a) of the subject process.

Preferably, the fibrous material has a carbon content of above 45% wt., and a hydrogen content of above 5 %wt.

The obtained composite materials have a density of typically in between 800 and 1600 kg/m³, preferably of from 1150 to 1500 kg/m³, and yet more preferably of from 1300 to 1400 kg/m³, such as 1350 kg/m³.
The composite material may further comprise further components, such as glass fibres, e.g. of 3 to 5 cm length. The composite material may also comprise additives, such as pigments, fillers, flow improvers, catalysts, wetting agents and other usually applied additives. These are suitably added in blending step (a).

The blending step (a) may be performed by any suitable method, including mechanical methods, and/or advantageously the use of cyclone technology, which may equally allow to pre-heat binder and fibrous material, as may be required for a continuous production. In such a line-up, the two materials, together with any additive or other material as required may be advantageously be blended and premixed from e.g. two silos, and then mixed intensively while already pre-heating to allow for an improved flow if a homogenous composite is desired.
Alternatively, the process may be performed batch-wise. The benefit of such a batch production is the relative ease of heating and shaping, but equally also the fact that a less homogenous material may be obtained, which can be advantageous if porous matrix materials are present as well, whereby a full saturation of cavities in the matrix may be avoided, thereby maintaining high insulation values and low density.

Step (a) is executed in a high shear blending apparatus, e.g. an extruder or geared pump. More preferably, the blending is done by extrusion, in an extruder line-up comprising more than one blending element.

Steps (a) and (b) are performed simultaneously, preferably in a high shear blending device. Step (b) comprises heating and cooling the mixture to different temperatures. Preferably the temperature in step (b) is in the range of from 130°C to 300°C. Steps (a) and (b) involve heating the blended materials to different temperature zones, e.g. to allow material to cool down after blending to avoid gassing out due to phase transition, retropolymerisation or oxidation reactions.

The blending apparatus thus preferably can be heated and cooled to allow heating the material during blending to a specified temperature, or to several temperatures if the blending is performed in various different blending zones.

The blending device should preferably agitate the thermoplastic melt to promote good mixing and to eliminate dead regions or stagnation during the process, to avoid hot spots and issue associated therewith, such as depolymerisation, oxidation and/or gassing out, and related issues with e.g. the smell of the obtained materials,

Suitable extruders include single, twin screw extruders, and extruders with higher number of screws or otherwise suitable means including gears, balls, spindles or rollers in addition to a centrally rotating drive shaft or screw, to provide shear. Preferably, the extruder is an intermeshing, co-rotating extruder. The one or more elements or screws may preferably comprise one or more of suitable types of conveying, blending, kneading and mixing elements, all being able to convey the material either forward, or forward and backward, for enhanced blending.

The blending elements in the device may include gears, balls, spindles or rollers in addition to a centrally rotating core in order to improve mixing conditions, providing for intensive mixing with reduced shear and stagnation.

Preferably the blending devices may also allow introducing a protecting gas atmosphere, e.g. nitrogen or argon to avoid oxidation, and hence comprises means to add these agents, and/or to remove any gases formed during the process.

Further suitable blending devices may include a plasticizer screw for advancing molten plastic to an injection mold with a circulating row of balls behind the flights of the screw for agitating the melt to promote better mixing, as disclosed in US-A-3,944,192. A further device for blending is disclosed in US-A-3,530,534, wherein an extruder includes a screw having a thread structure interrupted with a recess which includes two rows or rings of spherical balls. Yet a further device is disclosed in US-A-4,416,543, including a toothed central spindle and toothed planetary spindles disposed symmetrically around the central spindle such that the planetary spindles rotate and orbit the central spindle. This system has the benefit of allowing simultaneous blending, and heating and cooling to desired temperature profiles. A further suitable apparatus is disclosed in US-A-3,443,798, wherein a the processing device includes a rotor centrally mounted in a cylindrical shell and a plurality of sets of axially staggered orbital rollers located in the annulus between the rotor and the inner wall of the shell. The document also suggests the use of gear teeth on a rotor, shell and staggered orbital rollers.

Further suitable devices for blending include gears, balls, spindles or rollers in addition to a centrally rotating core that provide for intensive mixing with low stagnation, as well as the capability of heating to a desired temperature while avoiding hot spots.

In an alternative embodiment, the blending may be done by a dynamic mixing system located downstream of a screen changer and gear pump so as to deliver thoroughly mixed and cooled extrudate to the extrusion die from which it is emitted in the form of a shaped blended material, which may advantageously be shaped to a composite article of desired form.

A first blending may preferably also occur within an extruder feed hopper or prior to the materials being introduced into the hopper via an appropriate mixing device, for example, a blender. The materials can also be fed into the hopper using vibratory feeders. The hopper then advantageously feeds the mixed material into a suitable extruder or blending device. Within the blender or extruder, the material may be heated up, in particular in the case of thermoplastic binders, such that the binder enters a molten state. The blended material is then preferably discharged into a mold, where it shaped and cooled.

Different extrusion devices were found particularly suitable for use in the present invention. These may comprise a single or multiple extruders, preferably with various access points at which controlled amounts of thermoplastic, fibres, additional agents and/or additives may advantageously be added to the molten thermoplastic mass being produced by the extrusion system upstream of the extruding die. In a preferred line-up, the blending and heating step (a) and (b) are executed in a series of extruders, allowing a high shear to be applied to the first stage, wherein the materials are blended and heated to the desired first temperature range, and then on to the second stage, where due to the intimate blending that had already occurred, a lower shear rate can be applied. A particularly effective combination was found in the use of a planetary extruder, followed by a single screw extruder, and then moulding of the obtained blended materials at a temperature at or below the T_{g} of the major thermoplastic component.

Additionally to the particulate binder, one or more additional virgin or recycled thermosetting or thermoplastic binders may be employed, depending on the desired strength and density of the composite materials.

If a thermoset binder composition is to be employed in addition to the thermoplastic binder according to the invention, the blended material obtained in steps (a) and/or (b) are preferably shaped prior to, or during the curing step, to obtain a shaped and cured composite article, as the dimensional stability of thermoset materials tends to be much higher than that of thermoplastic materials. However, it is preferred that if the curing includes heating, that the actual cure process commences or occurs at a temperature at or above the melting temperature, to avoid early onset of curing, which may lead to gelation and other issues that may occur upon the formation of the three-dimensional network.

In step (b), the process according to the invention further preferably comprises heating the blended composite material such that the particulate binder material at the core of the blended material is flowing. The heating of the blended composite material may be done by any suitable heating means.

For the use of a thermoset binder along the thermoplastic binder composition, in a continuously operating embodiment of the invention, the blend of binder and fibrous material in step (c) may be pressed and heated from one or both sides, preferably pressed between a heated roll and a transportation belt, or more preferably, between heated rolls. According to another preferred embodiment, the composite to be cured is passed through a heating area, preferably through a furnace, or a microwave oven.

According to a further preferred embodiment of the invention, the blended material may be heated by radiation, such as microwave radiation, to ensure that the core of the composite material is homogeneously heated. Alternatively, and most easily, the process may be performed in a batch-wise operation, wherein the mold with the composite material is heated, advantageously in an oven.

Pre- or reheating of the binder material or the blended material prior to introduction into the mold may also be performed. This allows adapting the heating cycle to the particulate binder material in the case of thermoplastic binders.

After step (b), the heat supply may be removed, and the mould or press in step (c) may be cooled once the composite has been formed in the case of thermoplastic binders. In the case of the use of additional thermoset binders, step (c) ideally also includes the cure step, whereby the cure cycle requires that the particulate binders first melts and flows, while at the same time the curing occurs.

The composites may be formed by either a batch process or a continuous process. In a batch process, the components in the form are suitably blended together dry in the desired weight percentages.

The composite material further preferably may comprise a porous polymeric matrix layer, for increased thermal insulation. Preferably, when shaped into panels, the edges of the composite panel comprise a higher amount of the composite material to increase mechanic strength. The shaping process may advantageously be performed in a heated and/or cooled belt press.

Preferably, the process further comprises adding one or more woven or non-woven sheet material to at least one side of the composite blend prior to or during step (c).

This may be for simply decorative purposes, as well as UV filtration by using a pigmented or printed foil, or functional such as the use of glass or carbon fibre mats for increased strength.

The composite material preferably further comprises at least one woven or non-woven sheet layer, to improve the mechanical properties such as tensile strength and surface resilience. The composite material may further comprise a cover sheet material to create an exterior expression, such as coloured films, preferably also comprising a UV filter, printed films, printed paper or carton box, woven or non-woven fabrics.

According to a further preferred embodiment of the invention, the composite material may heated by radiation, such as microwaves to ensure that the core of the composite material also is heated. Alternatively, and most easily, the process may be performed in a batch-wise operation, wherein the mould with the composite material is heated, advantageously in an oven.

The heat supply may then be reduced, and the mould may be allowed to cool down, or actively cooled once the composite has been formed in the case of thermoplastic binders. In the case of the thermoset binders the cure cycle requires that the particulate binders first melts and flows, while at the same time the curing begins.

Preferably, the temperature in steps (a), (b) and/or (c) refers to a temperature in the range of from 190 to 350°C, preferably 120 to 280°C, yet more preferably 140 to 250°C.

The pressure in these steps may be any pressure that is suitably applied, and may range from ambient pressure or slightly above that, such as the pressure exerted by a vacuum bag, to a pressure of several tons per square meter, as suitably applied by e.g. a hydraulic press in the mould.

Preferably the pressure ranges of from 0.1 MPa to 10 MPa, preferably from 1 to 7 MPa, again more preferably from 2 to 6.5 MPa.

When calculated for step (c), the unit pressure applied to the composite material in a mould. The area is calculated from the projected area taken at right angles to the direction of applied force and includes all areas under pressure during the complete closing of the mould. The unit pressure, expressed in kg per square centimetre, is calculated by dividing the total force applied by this projected area. This is particularly suitable as a high-volume, high-pressure method suitable for a semi-continuous or continuous mode of operation. The time required to achieve a suitable strength and appearance depends largely on the kind of particulate binder used, but may range from several seconds, e. g. at high pressure and temperature, to several hours.

Preferably, the time wherein the increased temperature and pressure are applied ranges of from 1 s to 10 hours, more preferably from 5 s to 5 h, yet more preferably from 30 s to 3 h, again more preferably from 1 min to 1 h. Furthermore, the material may be pre-heated, and/or postcured or cooled down as required.

Preferably the process further may comprise adding at least one porous polymeric matrix layer, preferably a rigid urethane foam layer, and applying the blended material to at least one side of the foamed polymeric matrix layer, prior to step (c). This will result in less dense composites with high insulation values.

The present invention further relates to the use of the optionally shaped composite article as building or sheet material, as decorative and/or functional panelling, e.g. as noise suppression walls, furniture, or as a basis for flooring, e. g. as panels for laminate floors, or for furniture, e.g. kitchen table tops.

The present invention also relates to the composite material comprising a binder and a fibrous material, in a weight ratio of from 80:20 to 0:100, preferably of from 80:20 to 10:90, wherein the fibrous material has a density of from 150 to 500 kg/m³ prior to incorporation into the composite material, and wherein the binder material is a particulate binder comprising at least two thermoplastic polymers prior to incorporation into the composite, wherein both the binder and the fibrous material comprise at least in part recycled car materials, as obtainable by the subject process.

The composite material preferably has a flame spread index of B-S3 or better according to EN 13501-1:2007. The composite material is resistant to attack by microbes and insects and thus does not require expensive chemical treatments. Also, the material is resistant to degradation from exposure to ultraviolet light as well as damp, freezing conditions.

The present invention further preferably relates to a shaped article comprising the composite material according to the invention, such as advantageously in the form of a flat, square-shaped panel module for use in assembling building structures. Such panels may also advantageously be employed as replacement for fibre enforced concrete panels in structural or other outdoor applications, such as sound proofing, as at the side of highly frequented roads, or as cladding for e.g. dykes.

The following examples are provided to exemplify the invention.

### Example 1

As a particulate binder material, a thermoplastic waste material and a fibrous material, both obtained from Auto Recycling Nederland, were blended in a weight ratio of 1:1. The fibrous material and the thermoplastic material were both obtained according to a process as disclosed in WO-A-2009/124651, specifically fraction LF1, i.e. the light fraction after removal of metals and thermoplastics, and the latter as thermoplastic fraction disclosed in Table 1 therein.

The fibrous material had the following properties (table 2):

**Table 2: Compositional data of the fibrous material (AAS)**

| Unit | Component | |
|---|---|---|
| Ppm | Aluminium | 14,637 |
| Ppm | Antimony | 301 |
| Ppm | Arsenic | 10 |
| Ppm | Barium | 1,249 |
| Ppm | Beryllium | 0.1 |
| Ppm | Bismuth | 5.2 |
| Ppm | Boron | 90 |
| Ppm | Cadmium | 16 |
| Ppm | Calcium | 13,700 |
| Ppm | Chromium | 187 |
| Ppm | Cobalt | 17 |
| Ppm | Copper | 9,189 |
| Ppm | Gallium | 2 |
| Ppm | Iron | 27,400 |
| Ppm | Kalium | n.d. |
| Ppm | Lanthanum | 6 |
| Ppm | Lead | 2,572 |
| Ppm | Lithium | 12 |
| Ppm | Magnesium | 2,157 |
| Ppm | Manganese | 524 |
| Ppm | Mercury | 0.8 |
| Ppm | Molybdenum | 25 |
| Ppm | Natrium | n.d. |
| Ppm | Nickel | 151 |
| Ppm | Niobium | 3 |
| Ppm | Potassium | 733 |
| Ppm | Rubidium | 4.9 |
| Ppm | Scandium | 0.8 |
| Ppm | Selenium | 0.3 |
| Ppm | Sodium | 1,641 |
| Ppm | Strontium | 89 |
| Ppm | Silver | 9 |
| Ppm | Silicon | 14,050 |
| Ppm | Thallium | 0 |
| Ppm | Thorium | 1 |
| Ppm | Tin | 151 |
| Ppm | Titanium | 914 |
| Ppm | Tellur | n.d. |
| Ppm | Tungsten | 11 |
| Ppm | Uranium | 0 |
| Ppm | Vanadium | 16 |
| Ppm | Yttrium | 2 |
| Ppm | Zinc | 5,634 |
| Ppm | Zirconium | 42 |
| Weight %ds | Bromine | 0.03 |
| Weight %ds | Fluorine | 0.01 |
| Weight %ds | Chlorine | 1.61 |
| Weight %ds | Sulphur | 0.23 |

**Table 3: Physical measurements**

| **Unit** | **Property** | |
|---|---|---|
| kg/m³ | Density | 390 |
| % | LOI (Loss on Ignition) | 80 |
| % | Ignition residue (ash content) | 19 |
| °C | Temperature during LOI measurements | 667 |
| MJ/kg | Calorific value | 22 |
| % | Moisture content (105 °C) | 3.59 |
| % | Dry residue (105 °C) | 96 |
| % | C | 53 |
| % | H | 5.81 |
| % | N | 3.23 |
| % | S | n.d. |
| % | O (calculated) | 28 |

All ratios or measures herein, if not otherwise indicated, are by weight. A simple metal mould comprising two metal plates was employed, in an industrial hydraulic heated press.

The metal plates were covered with siliconized paper, then a woven glass fibre mat was placed onto the mold, then the pre-heated blended composite material (heated to 250°C), and finally a glass fibre mat.

Subsequently, the thus layered material was pressed between two metal plates to a layer thickness of about 3 cm, at a pressure equivalent to 45 kg/cm². Then the assembly was allowed to cool to room temperature.

After allowing the plates to cool, the thus obtained composite panel was subjected to a number of tests, including a humidity test by submersing the plates in boiling water and measuring the weight gain.

The plates had sufficient mechanical properties and showed no significant weight gain upon immersion for several hours.

### Example 2 Variation of ratios binder/fibrous material

Example 1 was repeated, varying the ratio of particulate binder on fibrous material from 2:1 to 1:4 by weight. All panels obtained were found to have a suitable appearance and sufficient strength, although density and mechanical properties increased with increased binder.

### Example 3: Extrusion

Example 2 was repeated, using a planetary extruder followed by a single screw extruder, and a single screw extruder. The obtained blended materials were pressed in a heated mould, and then allowed to cool down in a water bath.

The obtained plates were measured for elasticity modulus and screw retention, and were found to achieve high to sufficient values to be employed as building material.

The examples above clearly illustrate the advantages of the process and materials of the present invention. Although several specific embodiments of the present invention have been described in the detailed description above, this description is not intended to limit the invention to the particular form or embodiments disclosed herein since they are to be recognised as illustrative rather than restrictive, and it will be obvious to those skilled in the art that the invention is not limited to the examples.

## Claims

1. A process for the preparation of a composite material from a particulate material comprising at least two thermoplastic polymers and a fibrous material having a density of from 150 to 550 kg/m³, comprising the steps of
A) shredding a car body, and
B) removing at least part of the ferrous and/or non-ferrous metal, and
C) separating the fibrous material from a heavier fraction and a lighter particulate fraction, to obtain a fibrous material having a density of from 150 to 550 kg/m³; and
D) separating the particulate material comprising at least two thermoplastic polymers from the heavier fraction obtained in C), and
a) blending said particulate binder material and said fibrous material in a weight ratio of the particulate material and the fibrous material in the range of from 80:20 to 0:100 by extrusion, and
b) heating the blended material obtained in a) to a temperature at or above the glass transition temperature (T_{g}) of at least one of the thermoplastic polymers, and
c) shaping the heated material under pressure, to obtain a shaped composite material,
wherein steps (a) and (b) are performed simultaneously, and wherein steps (a) and/or (b) comprise heating and cooling the mixture to different temperatures.

2. A process according to any one of claims 1, wherein the particulate material comprises at least 5 thermoplastic polymers.

3. A process according to any one of claims 1 to 2, wherein the fibrous material has a carbon content of above 45% wt., and a hydrogen content of above 5 %wt..

4. A process according to claim 3, wherein the blending is done by extrusion in an extruder line-up comprising more than one blending element.

5. A process according to any one of the preceding claims, wherein the temperature in steps (a) and/or (b) is gradually increased to a temperature in the range of from 130°C to 300°C.

6. A process according to any one of the previous claims, further comprising adding a woven or non-woven sheet material to at least one side of the composite blend prior to step (c).

7. A process according to any one of the previous claims, further comprising shaping the composite to obtain a shaped article comprising the composite material.

8. A process according to claim 7, further comprising using the shaped composite article as building material, structural or decorative sheet material, furniture material, waterproof cladding and enforcement material; concrete sheeting material, and/or sound deadening material.

## Patentansprüche

1. Verfahren zum Aufbereiten eines Verbundmaterials aus einem Partikelmaterial, das mindestens zwei thermoplastische Polymere und ein Fasermaterial umfasst, das eine Dichte von 150 bis 550 kg/m³ aufweist, wobei das Verfahren die folgenden Schritte umfasst:
A) Schreddern einer Fahrzeugkarosserie, und
B) Entfernen mindestens eines Teils des Eisen- und/oder Nichteisen-Metalls, und
C) Abscheiden des Fasermaterials von einer schwereren Fraktion und einer leichteren Partikelfraktion, um ein Fasermaterial zu erhalten, das eine Dichte von 150 bis 550 kg/m³ aufweist;
und
D) Abscheiden des Partikelmaterials, das mindestens zwei thermoplastische Polymere aus der in C) erhaltenen schwereren Fraktion umfasst, und
a) Vermischen des Partikelbindermaterials und des Fasermaterials mittels Extrusion in einem Gewichtsverhältnis des Partikelmaterials und des Fasermaterials im Bereich von 80 : 20 bis 0 : 100, und
b) Erhitzen des in a) erhaltenen vermischten Materials auf eine Temperatur bei oder über der Glasübergangstemperatur (T_{g}) von mindestens einem der thermoplastischen Polymere, und
c) Formen des erhitzten Materials unter Druck, um ein geformtes Verbundmaterial zu erhalten,
wobei Schritte (a) und (b) gleichzeitig durchgeführt werden, und wobei Schritte (a) und/oder (b) das Erhitzen und Abkühlen des Gemischs auf unterschiedliche Temperaturen umfassen.

2. Verfahren nach Anspruch 1, wobei das Partikelmaterial mindestens 5 thermoplastische Polymere umfasst.

3. Verfahren nach einem der Ansprüche 1 bis 2, wobei das Fasermaterial einen Kohlenstoffgehalt von über 45 Gew.-% und einen Wasserstoffgehalt von mehr als 5 Gew.-% aufweist.

4. Verfahren nach Anspruch 3, wobei das Vermischen mittels Extrusion in einer Extruderlinie geschieht, die mehr als ein Mischelement umfasst.

5. Verfahren nach einem der vorgehenden Ansprüche, wobei die Temperatur in Schritten (a) und/oder (b) schrittweise auf eine Temperatur im Bereich von 130 °C bis 300 °C erhöht wird.

6. Verfahren nach einem der vorhergehenden Ansprüche, das vor Schritt (c) ferner das Hinzufügen von gewebtem oder nicht gewebtem Plattenmaterial zu mindestens einer Seite des Verbundgemischs umfasst.

7. Verfahren nach einem der vorhergehenden Ansprüche, das ferner das Formen des Verbunds umfasst, um einen geformten Artikel zu erhalten, der das Verbundmaterial umfasst.

8. Verfahren nach Anspruch 7, das ferner die Verwendung des geformten Verbundartikels als Baumaterial, strukturiertes oder dekoratives Plattenmaterial, Möbelmaterial, wasserdichtes Verkleidungs- und Verstärkungsmaterial; Betonplattenmaterial und/oder geräuschdämmendes Material umfasst.

## Revendications

1. Procédé permettant la préparation d'un matériau composite à partir d'un matériau particulaire comprenant au moins deux polymères thermoplastiques et un matériau fibreux possédant une densité allant de 150 à 550 kg/m³, comprenant les étapes de
A) déchiquetage d'une carrosserie de voiture, et
B) retrait d'au moins une partie du métal ferreux et/ou non ferreux, et
C) séparation du matériau fibreux d'une fraction plus lourde et d'une fraction particulaire plus légère, afin d'obtenir un matériau fibreux possédant une densité allant de 150 à 550 kg/m³ ; et
(D) séparation du matériau particulaire comprenant au moins deux polymères thermoplastiques de la fraction plus lourde obtenue à l'étape C), et
a) mélange dudit matériau liant particulaire et dudit matériau fibreux dans un rapport de poids du matériau particulaire sur le matériau fibreux compris dans la plage allant de 80:20 à 0:100 par extrusion, et
b) chauffage du matériau mélangé obtenu à l'étape a) à une température supérieure ou égale à la température de transition vitreuse (T_{g}) d'au moins l'un des polymères thermoplastiques, et
c) façonnage du matériau chauffé sous pression, afin d'obtenir un matériau composite façonné,
lesdites étapes (a) et (b) étant réalisées simultanément, et lesdites étapes (a) et/ou (b) comprenant le chauffage et le refroidissement du mélange à des températures différentes.

2. Procédé selon l'une quelconque des revendications 1, ledit matériau particulaire comprenant au moins 5 polymères thermoplastiques.

3. Procédé selon l'une quelconque des revendications 1 à 2, ledit matériau fibreux possédant une teneur en carbone supérieure à 45 % en poids et une teneur en hydrogène supérieure à 5 % en poids.

4. Procédé selon la revendication 3, ledit mélange étant réalisé par extrusion dans une gamme d'extrudeuses comprenant plus d'un élément mélangeur.

5. Procédé selon l'une quelconque des revendications précédentes, ladite température dans les étapes (a) et/ou (b) étant progressivement augmentée jusqu'à une température comprise dans la plage allant de 130°C à 300°C.

6. Procédé selon l'une quelconque des revendications précédentes, comprenant en outre l'ajout d'un matériau en feuille tissé ou non tissé à au moins un côté du mélange composite avant l'étape (c).

7. Procédé selon l'une quelconque des revendications précédentes, comprenant en outre le façonnage du composite pour obtenir un article façonné comprenant le matériau composite.

8. Procédé selon la revendication 7 comprenant en outre l'utilisation de l'article composite façonné en tant que matériau de construction, matériau en feuille structurel ou décoratif, matériau de meuble, matériau de renfort et de doublage imperméable ; matériau en feuille en béton et/ou matériau d'insonorisation.
